# EUROPEAN PATENT SPECIFICATION

(11) **EP 3 004 004 B1**
(45) Date of publication and mention of the grant of the patent: **17.07.2019**
(21) Application number: 13780415.9
(22) Date of filing: 13.09.2013
(51) Int. Cl.: C03C 3/091

(54) **NOVEL SODA LIME SILICATE GLASS COMPOSITION COMPRISING COLEMANITE AND A PROCESS FOR THE PREPARATION THEREOF**
NEUARTIGE KALK-NATRON-SILIKATGLAS-ZUSAMMENSETZUNG MIT COLEMANIT UND VERFAHREN ZUR HERSTELLUNG DAVON
NOUVELLE COMPOSITION DE VERRE DE SILICATE SODO-CALCIQUE COMPRENANT DE LA COLÉMANITE ET SON PROCÉDÉ DE PRÉPARATION

(30) Priority: 03.06.2013 IN 1657DE2013
(43) Date of publication of application: 13.04.2016
(73) Proprietor: Council Of Scientific & Industrial Research, New Delhi 110 001 (IN)
(72) Inventor: KALYANDURG, Annapurna, West Bengal 700032 (IN); BISWAS, Kaushik, West Bengal 700032 (IN); SONTAKKE, Atul, Dnyaneshwar, West Bengal 700032 (IN); SEN, Ranjan, West Bengal 700032 (IN)
(74) Representative: Dehns
(86) International application number: PCT/IN2013/000554
(87) International publication number: WO 2014/195960

(56) References cited:
- EP-A1- 1 195 359
- WO-A1-01/34531
- WO-A1-95/32925
- WO-A1-95/32926
- WO-A1-2014/128714
- US-A- 5 523 265
- POTTER R M ET AL: "GLASS FIBER DISSOLUTION IN A PHYSIOLOGICAL SALINE SOLUTION", GLASTECHNISCHE BERICHTE, VERLAG DER DEUTSCHEN GLASTECHNISCHEN GESELLSCHAFT, FRANKFURT, DE, vol. 64, no. 1, 1 January 1991 (1991-01-01), pages 16-28, XP000178832, ISSN: 0017-1085

## Description

The following specification particularly describes the invention and the manner in which it is to be performed:

### FIELD OF THE INVENTION

The present invention relates to novel soda lime silicate glass composition comprising colemanite and a process for the preparation thereof. In particular, the invention relates to the development of Boron containing soda lime silicate based different compositions yielding lower melting temperature, lower coefficient of thermal expansion, higher surface hardness, higher refractive index, higher glass transition temperature, higher dilatometric softening temperature with improved chemical durability which are suitable for the manufacture of container and flat glasses by float process. More particularly, the development of boron containing soda lime silicate based glasses with lower melting temperature; lower coefficient of thermal expansion, higher surface hardness, higher refractive index, higher glass transition temperature, higher dilatometric softening temperature with improved chemical durability can be used as solar panels, ophthalmic lenses and heat resistant glass cookware.

### BACKGROUND OF THE INVENTION AND DESCRIPTION OF PRIOR ART

Soda lime silicate glass is the most common commercially available oxide glass which is used as flat glass for window panes, and container glass for making containers. The composition of these two types of glasses also varies in a narrow range. The advantages of these glasses are mainly high transmission in the visible range, smooth surface and chemical durability with moderate surface hardness and low UV transmission. The production method for flat glass is float process while conventional blowing and pressing method is utilized to produce container glass. The flat glasses are primarily used for the automotive and structural applications as laminated glass and tempered glass for windows and doors. In particular, flat glass with low iron content and possessing high transmission is also used as cover glass for solar panels.

In general, the container glass finds applications in beverage bottles, food containers, toiletries, cosmetics and laboratory glassware. The colored container glasses are also in very much demand especially as amber (dark brown) containers for beer industry, medicine bottles in pharmaceutical industry, green containers used for wine and decorative or architectural purposes.
The melting temperature of soda lime silicate glass ranges from 1550°C to 1600°C depending on the glass composition. In order to minimize the energy requirement, the comparatively higher melting temperature of these soda lime silicate glasses may be reduced by lowering the amount of silica with a concomitant increase in the amount of alkali oxides as fluxing agents. However, the additional increase of these alkali oxides reduces the surface durability as well as chemical durability of glasses. To limit the loss of surface and chemical durability by the aid of other remaining constituent oxides in place of alkali oxide or silica, a reduction in working zone and significant deviation from the desired optical and thermal properties occur.

On the other hand, introduction of boron oxide (B₂O₃) in the soda lime silicate composition strengthens the glass network which actually contributes to the improved surface and chemical durability. In addition to this, incorporation of B₂O₃ in the soda lime silicate glass may lower down the melting temperature along with widening up of working range. This may lead to a reduction in the overall energy consumption.

Reference may be made to US Patent No. 3779733 wherein method of preparation of heat absorbing glass based on soda lime silicate glass compositions useful for the automobile and architectural applications has been reported. The patent discloses the art of retaining around 80% of iron in ferrous state by the modification of composition with inclusion of certain reducing agents. But, the patent does not report any reduction in melting temperature due to the modification in glass composition.

Reference may be made to US patent No. 3833388 wherein method of reducing the melting temperature and widening of working range of flat glass compositions based on soda lime silicate system has been reported. In this patent, alkali concentration was increased at the expense of SiO₂ and more particularly of CaO content. However, a significant reduction in the melting temperature was not realized in the compositions proposed in the said patent.

Reference may be made to U. S. Patent No. 7037869 which describes a clear glass composition which could be obtained by float process. It discloses the addition of colorants along with oxidizers to the base glass composition comprising of soda lime silicate system to improve the visible transmission most preferably at least of 90% but it does not describe any reduction in the melting temperature due to the compositional modification.

Reference may be made to U.S. Patent publication No. 2007/0215205 which discloses a high transmission low iron clear glass composition based on soda lime silicate produced under highly oxidized conditions for solar cells or like. However, it does not provide any reduction in melting temperature of these glasses.

Reference may be made to U.S Patent No. 5071796 wherein flat glass compositions with improved melting and tempering properties have been reported. Among the reported 28 compositions, the minimum melting temperature was observed to be 2464°F (1351°C) for a glass composition wherein the content of alkali oxides (Na₂O+K₂O) was increased up to 18.7% at the expense of SiO₂ contents falling below 70 %. However, the high alkali content in the glass is expected to deteriorate the mechanical strength and chemical durability. Moreover, the patent does not report any such property data for the proposed compositions.

Reference may be made to U.S Patent publication No. 2010/0252787 wherein soda lime silicate glass made using commercially available low cost batch materials containing iron oxide and incorporating discoloring agent like MnO₂ has been reported. In this work, vanadium pentoxide (V₂O₅) has been used to enhance ultraviolet blocking of the glasses for protecting coatings within a solar panel from ultraviolet induced damage. The drawback of the invention is that no reduction of melting temperature is reported. Moreover, there is no detailed property data like coefficient of thermal expansion and liquidus temperature.

Reference may be made to US Patent No. 5346768 wherein development of vanadium containing soda lime silicate glass with high UV absorption for wavelengths below 350 nm has been reported. However, the main drawback of this invention is that the thermal property, mechanical strength and melting temperature of the glass composition were not dealt with.

Reference may be made to U.S Patent publication No. 2007/0215205 wherein soda lime silicate glass with low iron content prepared in an oxidized atmosphere to yield high visible transmission for their use in solar cell application as cover glass has been reported. The patent also describes the glass compositions free of antimony oxide or having them in very low concentrations since it may be deleterious for float process. However, there is no mention of solarization effect and reduction of melting temperature. Moreover, in this patent, the claim of high UV transmission could be detrimental for solar applications.

Reference may be made to U.S Patent publication Nos. 2010/0255980 and 2011/0275506 wherein a high transmission low iron glass that includes boron oxide is reported for improved optics, durability and refining. However, the maximum amount of boron oxide included into the glass is only limited to 0.1-3.0 %. Boron oxide has been introduced into the glass batch in the form of boric acid (H₃BO₃), sodium tetraborate decahydrate (Na₂B₄O₇.10 H₂O), sodium tetraborate pentahydrate (Na₂B₄O₇, 5H₂O). However, the main drawback is that such a low concentration of boron oxide in the glass composition could not lead to a substantial reduction in liquidus temperature and no significant improvement in refining.

Reference may be made to U.S Patent No. 4074990 wherein boron containing glass batch compositions suitable for preparation of glass fibers was reported. Colemanite mineral has been used as the source of boron oxide in these glasses. However, these glasses are not based on soda lime silicate glass compositions.

Reference may be made to U. S. Patent No. 5219801 wherein borosilicate glass compositions in micron level thickness were used as protective covers for gallium arsenide solar cells having coefficient of thermal expansion within the range of 64-70×10⁻⁷ K⁻¹. In this patent, there is no mention of starting raw material source for boron oxide. The drawback of the invention is its limited application exclusively for gallium arsenide solar cells. Another major drawback of the invention is that there is no report of UV and visible transmission and solarization effect when exposed to solar energy. Furthermore, in the patent, no report of transparency in the bulk glass is presented.

Reference may be made to U. S. Patent No. 6207603 wherein a borosilicate glass with high transparency (> 90%) was proposed for solar cell cover glass in the form of a micro sheet. The drawback of the invention is that, the transmission is only reported as microsheet and not in bulk form. Further, the coefficient of thermal expansion for those glasses has not been reported in the patent.

Reference may be made to Potter et al, Glastechnische Berichte, 1991, pages 16-28, which discloses a technique to measure the dissolution rate of glass fibres in the laboratory under conditions approximating those thought to exist in the lung.

Reference may be made to WO 01/34531, which discloses a flat glass to be tempered which forms, when subjected to thermal tempering treatment, a tempered glass having a thermal tempering coefficient represented by a quotient obtained by dividing a surface compression stress (MPa) by a sheet thickness, of 35 to 75, and a composition of glass for the flat glass.

In summary, the following are the major drawbacks of the hitherto known glasses:
a) Modification of compositions either by increase of alkali content with simultaneous reduction of silica or by the aid of other constituent oxides in soda lime silicate systems resulted in negligible reduction in melting temperature. Also, there is no significant reduction in melting temperature even with the inclusion of small amounts (0.1-3 %) of boron oxide in the form of boric acid (H₃BO₃), sodium tetraborate decahydrate (Na₂B₄O₇.10 H₂O), sodium tetraborate pentahydrate, (Na₂B₄O₇, 5H₂O) etc. in soda lime silicate glass for solar application.
b) The relevant property data of these glasses upon compositional modifications has not been reported
c) For solar panel applications, the usage of borosilicate glass as cover glass is reported only as microsheet and not in bulk form
d) The effect of using colemanite (CaB₃O₄(OH)₃·H₂O), a calcium borate mineral, as a source of both calcia and boron oxide in soda lime silicate glasses has not been reported so far in the available literatures.

Colemanite consists of around 40 wt.% of B₂O₃ and 25-28 wt.% of CaO with minor constituents like SiO₂, Al₂O₃, MgO, SrO and Na₂O. The dual presence of CaO and B₂O₃ in this mineral could be utilized as a potential raw material for simultaneous inclusion of both calcia and boron oxide into soda lime silicate glass. Hence, there is an ample scope to develop soda lime silicate glass compositions with inclusion of B₂O₃ for significant reduction in melting temperature along with better refinement of glass melt and improvement in thermal, optical and mechanical properties of glass using colemanite mineral as a raw material source of both boron oxide (B₂O₃) and calcia (CaO) in compositions of flat and container glasses. In particular, soda lime silicate composition with inclusion of B₂O₃ suitable for the preparation of flat glass through float process which possess high transparency and improved thermal and mechanical properties along with reduced melting temperature could be a potential and cost-effective material for solar panels as cover glasses.

### OBJECTIVES OF THE INVENTION

The main objective of the present invention is thus to provide novel composition for soda lime silicate glass for energy efficient processing and involving colemanite which obviates the drawbacks of the hitherto known prior art.

Another objective of the present invention is to provide soda lime silicate composition containing boron oxide exhibiting reduced melting temperature along with improved thermal and mechanical properties for flat glass specifically destined for solar panels and container glass applications.

Still another objective of the present invention is to provide soda lime silicate composition containing boron oxide which is introduced in the form of colemanite mineral wherein colemanite mineral also serves as raw material source of calcia (CaO), a major component in the present flat and container glass compositions.

Yet another objective of the present invention is to provide soda lime silicate composition containing significant amounts of boron oxide and still exhibiting reduced melting temperature, reduced coefficient of thermal expansion, enhanced glass transition temperature, dilatometric softening point and microhardness, along with refractive index and dispersion properties comparable to that of parent soda lime silicate glass.

### SUMMARY OF THE INVENTION

Accordingly, the present invention provides soda lime silicate glass compositions for energy efficient processing using colemanite which comprise essentially of 60.82-69.45 wt% silica, 4.26-13.14 wt% B₂O₃, 13.00-13.70 wt.% Na₂O, 8.59-10.30 wt.% CaO, along with other minor components in the indicated proportion of 0.15-1.30 wt% Al₂O₃, 0.03-0.30 wt% K₂O, 0.46-4.04 wt% MgO, 0.13-0.41 wt% SrO and 0.01-0.02 wt% TiO₂ with trace amount of impurities comprising of not more than 0.04 wt. % Fe. This composition can be used for the manufacturing of flat and container glasses.

In an embodiment of the present invention, soda lime silicate glass compositions for energy efficient processing using colemanite comprise essentially of 60.82-68.80 wt.% SiO₂, 4.26-12.24 wt.% B₂O₃, 13.70 wt.% Na₂O, 0.03 wt.% K₂O, 8.59-8.83 wt.% CaO, 4.00 wt.% MgO, 0.13-0.37 wt.% SrO, 0.15 wt.% Al₂O₃, 0.02 wt.% TiO₂, and trace amount of Fe coming from raw materials for the manufacturing of flat glasses.

In another embodiment of the present invention, soda lime silicate glass compositions for energy efficient processing using colemanite comprise essentially of 61.28-69.45 wt.% SiO₂, 4.97-13.14 wt.% B₂O₃, 13.00 wt.% Na₂O, 0.30 wt.% K₂O, 9.28-10.30 wt.% CaO, 0.46-1.24 wt.% MgO, 0.15-0.41 wt.% SrO, 1.30 wt.% Al₂O₃, 0.01 wt.% TiO₂, and trace amount of Fe coming from raw materials for the manufacturing of container glasses.

In yet another embodiment of the present invention, additional B₂O₃ gradually replaces silica and thus the total SiO₂ + B₂O₃ content does not exceed 73.06 wt% and 74.42 wt% in the flat and container glasses respectively.

In still another embodiment of the present invention, additional SrO and MgO that are introduced from colemanite mineral have been substituted with CaO and consequently the total alkaline earth content (CaO + MgO + SrO) does not exceed 13.00 wt% and 10.93 wt% in the flat and container glasses respectively.

In yet another embodiment, the present invention provides novel soda lime silicate glass composition comprising essentially of 60.82-69.45 wt% silica, 4.26-13.14 wt% B₂O₃, 13.00-13.70 wt% Na₂O, 8.59-10.30 wt% CaO along with other minor components in the indicated proportion of 0.15-1.30 wt% Al₂O₃, 0.03-0.30 wt% K₂O, 0.46-4.04 wt% MgO, 0.13-0.41 wt% SrO and 0.01-0.02 wt% TiO₂ with trace amount of impurities comprising of not more than 0.04 wt% Fe. Calcium carbonate is gradually and completely replaced by colemanite to get desired calcia (CaO) in the claimed compositions. It means, 0.0 calcium carbonate containing composition will have 10.58 wt% of colemanite which is serving as source for Calcia (CaO).

In yet another embodiment of the present invention, the said glasses have the optical transmission above 90%.

In still another embodiment of the present invention, soda lime silicate glasses for flat glasses specifically for solar panels and container glasses have the refractive indices (n_{d}) ranging from 1.5243 - 1.5345.

In yet another embodiment of the present invention, soda lime silicate glasses for flat glasses specifically for solar panels and container glasses have the coefficient of thermal expansion (α₅₀₋₃₀₀) ranging from 86 - 84 x 10⁻⁷ K⁻¹ and 87 - 83 x 10⁻⁷ K⁻¹ with the increased inclusion of boron oxide content respectively.

In still another embodiment of the present invention, soda lime silicate glasses for flat glasses specifically for solar panels and container glasses have the glass transition temperatures varying from 572 - 583°C and 582 - 587°C respectively.

In yet another embodiment, the present invention provides a process for the preparation of soda lime silicate flat and container glasses using colemanite as one of the source raw material for both B₂O₃ and CaO and the said process comprising the following steps:
i. mixing 11.20 to 32.16 wt% colemanite, 58.95 to 68.31 wt% quartz, 0.41 wt% feldspar, 24.32 to 24.38 wt% soda ash, 0.0 to 10.58 wt% calcium carbonate, 0.06 to 0.08 wt% aluminum trioxide, 2.88 to 3.64 wt% magnesium oxide and 0.01 wt% titanium dioxide for soda lime silicate flat glass composition and 13.06 to 34.52 wt% colemanite, 56.48 to 71.08 wt% quartz, 4.12 wt% feldspar, 22.85 to 22.92 wt% soda ash, 0.0 to 12.22 wt% calcium carbonate, 0.72 to 0.74 wt% aluminum trioxide and 0.01 wt% titanium dioxide for soda lime silicate container glass composition for a period of 30 minutes to obtain a homogenous batch mixture;
ii. melting the homogenous batch mixtures as obtained in step (i) at temperature in the range of 1450 to 1600°C for period of 2.0 h with the intermittent stirring manually at an interval of 45 minutes for two times with quartz rod in order to achieve homogeneity.
iii. The homogeneous melt as obtained in step (ii) was cast on preheated (300°C) cast iron mould to obtain glass slabs followed by its immediate transfer to annealing furnace kept at 550°C to anneal for 4 hrs.

It may be noted that in step [i] recited above, Calcium carbonate is gradually and completely replaced by colemanite to get desired calcia (CaO) in the claimed compositions. It means, 0.0 calcium carbonate containing composition will have 10.58 wt% of colemanite which is serving as source for Calcia (CaO).

In still another embodiment of the present invention, the said glass compositions have the isokom temperature at a viscosity of 1 Pa.s ranging from maximum 1413°C to minimum 1234°C.

In yet another embodiment of the present invention, the addition of B₂O₃ incorporated from colemanite in the said glass compositions brings down the batch melting temperature by at least 150°C.

The present disclosure provides:
a) The use of colemanite for the first time in soda lime silicate glass compositions for energy efficient processing and soda-lime-silica glass compositions containing boron oxide with high transmission, reduced melting temperature as well as improved thermal and mechanical properties for solar cell application which obviates the drawbacks of the hitherto known prior art.
b) The development of soda lime silicate glass compositions for energy efficient process with inclusion of boron oxide by the use of colemanite as raw material for both boron oxide and calcia (CaO), a major component for flat panels and containers.
c) a great benefit to the processing of flat glass for application of solar panels by reducing the production cost due to energy efficient processing with visible transmission higher than 90%.
d) an improvement in the refining process of the glass melt using colemanite as one of the raw materials wherein SO₄⁻² radical comes from colemanite mineral.

In yet another embodiment, the present invention provides a composition and a process for the preparation thereof; incorporating colemanite in the chemical composition of soda-lime-silica based flat and container glasses as the source for both calcia (CaO) and boron oxide (B₂O₃). The invented compositions for flat panel glasses comprises of 60.82-68.80 wt.% SiO₂, 4.26-12.24 wt.% B₂O₃, 13.70 wt.% Na₂O, 0.03 wt.% K₂O, 8.59-8.83 wt.% CaO, 4.00-4.04 wt.% MgO, 0.13-0.37 wt.% SrO, 0.15 wt.% Al₂O₃, and 0.02 wt.% TiO₂ along with 0.04 wt.% Fe coming as impurity from starting raw materials while the oxide chemicals for container glass comprises of: 61.28-69.45 wt.% SiO₂, 4.97-13.14 wt.% B₂O₃, 13.00 wt.% Na₂O, 0.30 wt.% K₂O, 9.28-10.30 wt.% CaO, 0.46-1.24 wt.% MgO, 0.15-0.41 wt.% SrO, 1.30 wt.% Al₂O₃ and 0.01 wt.% TiO₂ along with 0.04 wt.% Fe coming as impurity from starting raw materials.

In still another embodiment, the present invention provides a composition and a process for the preparation thereof, wherein as a result of the incorporation of colemanite in the chemical composition of soda-lime-silica based flat and container glasses the melting process was carried out at lower temperature (1450°C-1550°C) compared to the compositions of soda-lime-silica glasses known in the prior arts.

In yet another embodiment of the present invention, the incorporation of B₂O₃ at its maximum level of 12.24 wt% for flat glass and 13.24 wt% for container glass compositions originating from the addition of colemanite with simultaneous substitution for limestone (CaCO₃) up to 100% in the investigated glasses resulted in an energy efficient, cost effective and environment friendly glass melting process.

In still another embodiment, the present invention provides a composition wherein additional B₂O₃ gradually replaces silica and thus the total SiO₂ + B₂O₃ content does not exceed 73.06 wt%.

In yet another embodiment, the present invention provides a composition wherein additional B₂O₃ gradually replaces silica and thus the total SiO₂ + B₂O₃ content does not exceed 74.42 wt%.

In still another embodiment, the present invention provides a composition wherein additional SrO and MgO that are introduced from colemanite mineral have been substituted with CaO and consequently the total alkaline earth content (CaO + MgO + SrO) does not exceed 13.00 wt%.

In yet another embodiment, the present invention provides a composition wherein additional SrO and MgO that are introduced from colemanite mineral have been substituted with CaO and consequently the total alkaline earth content (CaO + MgO + SrO) does not exceed 10.93 wt%.

In still another embodiment, the present invention provides a composition wherein the glass refractive indices (n_{d}) varies from minimum 1.5243 to maximum 1.5339.

In yet another embodiment, the present invention provides a composition wherein the glass refractive indices (n_{d}) varies from minimum 1.5263 to maximum 1.5345.

In still another embodiment, the present invention provides a composition wherein the glass transition temperature varies from minimum 572°C to maximum 583°C.

In yet another embodiment, the present invention provides a composition wherein the glass transition temperature varies from minimum 582°C to maximum 587°C.

In still another embodiment, the present invention provides a composition wherein the dilatometric softening temperature varies from minimum 622°C to maximum 626°C.

In yet another embodiment, the present invention provides a composition wherein the dilatometric softening temperature varies from minimum 622°C to maximum 635°C.

In still another embodiment, the present invention provides a composition wherein the coefficient of thermal expansion varies from maximum 86 × 10⁻⁷ K⁻¹ to minimum 84 × 10⁻⁷ K⁻¹.

In yet another embodiment, the present invention provides a composition wherein the coefficient of thermal expansion varies from maximum 87 × 10⁻⁷ K⁻¹ to minimum 83 × 10⁻⁷ K⁻¹.

In still another embodiment, the present invention provides a composition wherein the transmissions at 580 nm are above 90%.

In yet another embodiment, the present invention provides a composition wherein the isokom temperature at a viscosity of 1Pa.s varies from maximum 1372°C to minimum 1234°C.

In still another embodiment, the present invention provides a composition wherein isokom temperature at a viscosity of 1Pa.s varies from maximum 1413°C to minimum 1275°C.

In yet another embodiment, the present invention provides a composition wherein the melting temperature decreases by at least 150°C from 1600 °C down to 1450 °C with the progressive addition of B₂O₃ incorporated from colemanite.

### BRIEF DESCRIPTION OF THE ACCOMPANYING DRAWINGS

**Figure 1** represents UV-vis-NIR transmission spectra of invented flat glass samples FC01 to FC04.
**Figure 2** represents the measured viscosity of FC01 (blank flat glass) and FC04 (flat glass with 100 % Colemanite as raw materials for total CaO) as function of temperature.
**Figure 3** represents UV-vis-NIR transmission spectra of invented container glass samples CC01 to CC04.
**Figure 4** represents the measured viscosity of CC01 (blank container glass) and CC04 (container glass with 100 % Colemanite as raw materials for total CaO) as function of temperature.

The drawings are included to provide better understanding of the invention, illustrate the embodiments of the invention and together with the description serve to explain the importance of the invention.

### DETAILED DESCRIPTION OF THE INVENTION

The present invention provides soda lime silicate glass compositions for energy efficient processing using colemanite which exhibit high transmission and reduced melting temperature along with improved thermal and mechanical properties. It is worth mentioning that, the melting temperature of these glasses has got reduced to around 150°C depending upon the successive increase of colemanite mineral in the glass compositions when compared to the melting temperature of commercial soda lime silica glasses. This substantial decrease in melting temperature will certainly diminish the overall power consumption for glass melting. The invention thus creates a breakthrough in utilizing colemanite mineral as a raw material which will serve as a source of both boron oxide and calcia resulting in soda lime silica flat and container glass compositions for energy efficient processes with improved optical transmission, thermal and mechanical properties and suitable for solar panels and container glass applications.

Detailed glass compositions are given in Table 1. The raw materials for the present invention have been chosen from the minerals such as quartz, soda-ash, feldspar, and colemanite whose compositions have been listed in Table 2. Along with these minerals, fine chemicals like CaCO₃, Al₂O₃, TiO₂ were chosen as raw materials. Each oxide coming from the raw materials serve a definite purpose in the overall composition resulting in an improvement in high transmission and improved melting, thermal and mechanical properties of the invented glasses. Following is a brief account of the different oxides present in the glasses.

SiO₂ is a glass forming oxide and was added in the glass composition as network former. The SiO₂ content was 60.82-68.80 wt% for flat glass and 61.28-69.45 w% for container glass.

**Table 1: Chemical compositions and properties of blank (FC01 & CC01) and boron oxide incorporated soda lime silicate flat (FC 02, FC03, FC04); container (CC02, CC03, CC04) glasses**

| **COMPOSITION (in wt%)** | **FLAT GLASS** | | | | **CONTAINER GLASS** | | | |
|---|---|---|---|---|---|---|---|---|
| | **FC01** | **FC02** | **FC03** | **FC04** | **CC01** | **CC02** | **CC03** | **CC03** |
| SiO₂ | 73.06 | 68.80 | 64.54 | 60.82 | 74.42 | 69.45 | 64.48 | 61.28 |
| B₂O₃ | - | 4.26 | 8.52 | 12.24 | - | 4.97 | 9.94 | 13.14 |
| Al₂O₃ | 0.15 | 0.15 | 0.15 | 0.15 | 1.30 | 1.30 | 1.30 | 1.30 |
| Na₂O | 13.70 | 13.70 | 13.70 | 13.70 | 13.00 | 13.00 | 13.00 | 13.00 |
| K₂O | 0.03 | 0.03 | 0.03 | 0.03 | 0.30 | 0.30 | 0.30 | 0.30 |
| CaO | 9.00 | 8.83 | 8.69 | 8.59 | 10.50 | 10.30 | 9.68 | 9.28 |
| MgO | 4.00 | 4.00 | 4.00 | 4.00 | 0.43 | 0.46 | 0.93 | 1.24 |
| SrO | - | 0.13 | 0.27 | 0.37 | - | 0.15 | 0.31 | 0.41 |
| TiO₂ | 0.02 | 0.02 | 0.02 | 0.02 | 0.01 | 0.01 | 0.01 | 0.01 |
| Fe | 0.04 | 0.04 | 0.04 | 0.04 | 0.04 | 0.04 | 0.04 | 0.04 |

| **GLASS PROPERTIES** | | | | | | | | |
|---|---|---|---|---|---|---|---|---|
| Density, d in gcm⁻³ | 2.4981 | 2.5396 | 2.5507 | 2.5638 | 2.5007 | 2.5264 | 2.554 | 2.5568 |
| Refractive index, n_{d} | 1.5184 | 1.5243 | 1.5298 | 1.5339 | 1.5181 | 1.5263 | 1.5323 | 1.5345 |
| Dispersion, (n_{F} - n_{C}) | 0.0089 | 0.0086 | 0.0087 | 0.0078 | 0.0091 | 0.0086 | 0.0086 | 0.0087 |
| Coeff. Thermal Expansion, α₅₀₋₃₀₀ in K⁻¹ | 91E-07 | 86E-07 | 85E-07 | 84E-07 | 90E-07 | 87E-07 | 86E-07 | 83E-07 |
| Glass Transition temperature, T_{g} in °C | 564 | 572 | 580 | 583 | 582 | 583 | 584 | 587 |
| Dilatometric Softening Point, T_{d} in °C | 614 | 622 | 625 | 626 | 616 | 622 | 630 | 635 |
| Hardness, HV in GPa | 4.54 | 5.10 | 5.50 | 5.10 | 4.46 | 4.50 | 5.02 | 5.07 |
| Transmission, %T at 580 nm | 91 | 91 | 91 | 91 | 91 | 91 | 91 | 91 |
| Isokom temp. at 1 Pa.s in °C (melting temp.) | 1436 | 1372 | 1301 | 1234 | 1477 | 1413 | 1346 | 1275 |
| Isokom temp. at 3 Pa.s in °C (working temp.) | 1017 | 979 | 944 | 902 | 1029 | 991 | 957 | 916 |

**Table 2: Chemical assay (in wt%) analysis of colemanite and other raw materials used in the investigation**

| **Oxide Component** | **Colemanite mineral** | **Quartz mineral** | **Feldspar mineral** | **Soda Ash mineral** | **CaCO₃ (GR grade)** | **MgO (GR)** |
|---|---|---|---|---|---|---|
| B₂O₃ | 40.00 min | | | | | |
| SiO₂ | 4.50 max | 99.24 | 74.40 | | | |
| Fe₂O₃ | 0.05 max | 0.04 | 0.08 | 0.04 | 0.02 | 0.05 |
| Al₂O₃ | 1.00 max | | 13.13 | | | |
| CaO | 25 - 28 | | 0.67 | | 99.00 (CaCO₃) | |
| MgO | 3.00 max | | | | | 99.00 |
| NaCl | - | | | | | |
| Na₂SO₄ | - | | | | | |
| Na₂O | 0.25 max | | 2.87 | 56.12 | | |
| K₂O | - | | 7.28 | | | |
| SrO | 0.90 max | | | | | |
| SO₄ | 0.40 max | | | | | |
| As | 40 ppm max | | | | | |
| Moisture | 6.00 max | | | | | |

B₂O₃ is another glass forming oxide for mainly reducing the melting temperature of the soda lime silicate compositions together with improved thermal and mechanical properties. The B₂O₃ content in the present invention varies from 4.26-12.24 wt% for flat glass and 4.97-13.14 w% for container glass. The total content of the glass formers (SiO₂ + B₂O₃) remains as 73.06 wt% for flat glass and 74.42 wt% for container glass.

Na₂O and K₂O are used as flux to lower down the melting point of silica. The Na₂O content for the flat glass is 13.7 wt.% whereas it is 13.00 wt. % for container glass while that of K₂O is 0.03 wt.% for flat glass and 0.30 wt% for container glasses, respectively.

CaO is an alkaline earth oxide which is used in the glass composition to improve chemical durability of the glasses. The CaO content varies from 8.59-8.83 wt% for flat glass and 9.28-10.30 wt% for container glass.

MgO is added in the glass composition for widening the working range and lowering down the liquidus temperature. The MgO content remains 4.00 wt% in flat glass composition and varies from 0.46-1.24 wt% for container glass composition.

The gradual increase of MgO content in the container glass composition is due to the excess MgO coming from colemanite mineral as shown in Table 2. Similarly, SrO, another alkaline earth oxide is being introduced in the glass composition as an additional minor ingredient from colemanite mineral. The SrO content varies from 0.13-0.41 wt% for both flat and container glasses.

SrO and MgO that were introduced from colemanite mineral have been substituted with CaO and consequently the total alkaline earth content (CaO + MgO + SrO) does not exceed 13.00 wt% and 10.93 wt% in flat and container glasses respectively.

Al₂O₃ is added in the glass composition to improve the strength and stability of the glasses and its content is 0.15 wt.% for flat glass composition and 1.30 wt.% for container glass.

TiO₂ is added as minor component (0.01-0.02 wt.%) in the glass composition to improve the UV-absorption.

SO₄⁻² radical coming from colemanite mineral is added in the initial batch composition which improves the refining process of glass melt.

The soda lime silicate glass compositions of the present invention are suitable for preparing the glasses by high temperature melt quenching technique. It is notable to mention that the present invention is not only limited to the listed chemical assay of the raw materials given in table 2 but also can be adopted for similar raw materials with varied chemical assay. The glass melting process comprises of the following steps:
Appropriately weighed raw materials as per the composition per batch were mixed thoroughly in a porcelain bowl for 30 minutes to ensure uniform mixing of raw materials. At this stage, the batch should be handled with care to avoid any kind of contamination. The batch was charged partly in platinum crucible and the same was introduced in a resistance heating raising hearth electric furnace at temperature of 1350 to 1450 degree C to digest the whole batch by successive charging at the same temperature at an interval of 20 minutes. After the completion of full batch charging the furnace temperature was increased to 1450°C - 1550°C depending upon the glass composition with a ramp rate of 2.5 °C/min. The melting of the chemical batch was done at this temperature for 2 hrs. The intermittent stirring of the melt was carried out manually during the melting process at an interval of 45 minutes for two times with quartz rod in order to achieve homogeneity. The homogeneous melt was cast on preheated (300°C - 350°C) cast iron mould to obtain glass slab followed by its immediate transfer to annealing furnace kept at 500°C - 550°C to anneal for 4 hrs.

The above description represents a laboratory melting process. However, the soda lime silicate glass compositions of the present invention are suitable for preparing in large scale, commercial glass production via float process for flat glass or any other suitable process to yield structured glass panels. The soda lime silicate glass compositions of the present invention are also suitable for preparing the glasses via press moulding process for container glass manufacturing.

Thus, the soda lime silicate compositions of the present invention for flat and container glasses as shown in Table 1, essentially comprising of 60.82-69.45 wt% silica, 4.26-13.14 wt% B₂O₃, 13.00-13.70 wt% Na₂O, 8.59-10.30 wt% CaO, along with other minor components in the indicated proportion of 0.15-1.30 wt. % Al₂O₃, 0.03-0.30 wt. % K₂O, 0.46-4.00 wt. % MgO, 0.13-0.41 wt.% SrO and 0.01-0.02 wt% TiO₂ with trace amount of impurities comprising of not more than 0.04 wt% Fe, are specifically suitable to prepare flat panel glasses by float method as well as container glasses by press moulding process, wherein the total content of the glass formers (SiO₂ + B₂O₃) remains as 73.06 wt.% for flat glass and 74.42 wt.% for container glass while, the total alkaline earth content (CaO + MgO + SrO) does not exceed 13.00 wt% and 10.93 wt% respectively for flat and container glasses.

The glasses were characterized for their physical, optical, thermal, mechanical and spectral properties in accordance with the standard techniques. The glass density is measured following Archimedes' principle using doubled distilled water as immersion liquid on Metler-Tolado electronic mono-pan balance equipped with density kit having an accuracy of ± 0.00005 g. To study the dispersion properties of the prepared glasses, refractive indices at five different wavelengths (473 nm, 532 nm, 633 nm, 1064 nm, and 1552 nm) were recorded with an accuracy of 10⁻⁴ on a prism coupler refractometer (Model Metricon M-2010, Pennington, NJ) built-in with five different lasers as illuminating sources. The linear refractive indices at standard wavelengths have been determined from the dispersion curves obtained by the simulation of five coordinate Sellmeier relation. The coefficient of thermal expansion (CTE), glass transition temperature (T_{g}) and dilatometric softening point (T_{d}) were measured using a horizontal-loading dilatometer (Netzsch, Model 402 PC). The hardness of the glass was measured by micro-indentation technique on micro-indentation hardness testing system (Clemex CMT, Longueuil, Canada) equipped with a conical Vicker's indenter at an indent load of 500 g. About ten indents were taken for this sample with identical loading condition. Optical transmission spectrum was recorded on UV-Vis-NIR spectrophotometer (Perkin-Elmer, Lambda 20) at room temperature in the wavelength range 200-1100 nm. The high temperature viscosity of the glass was measured on rotating cylinder type viscometer (Behr, VIS403).

### EXAMPLES

*The following examples are given by way of illustration only and therefore should not be construed to limit the scope of the present invention.*

### EXAMPLE-1

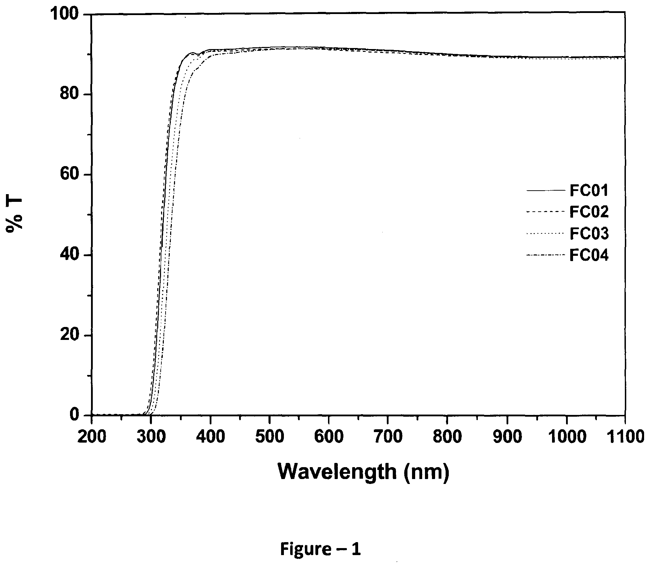

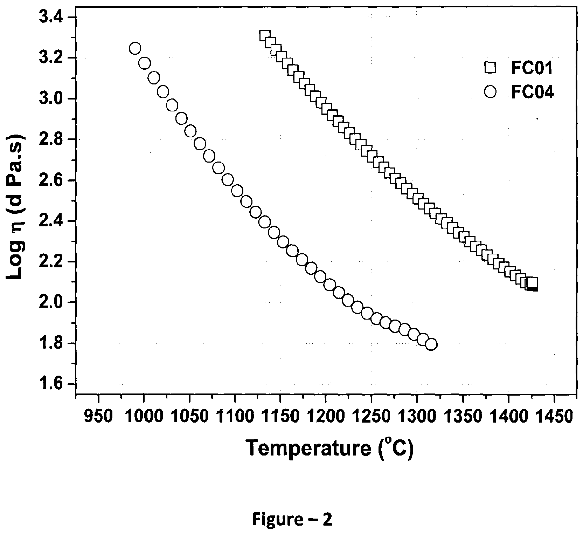

The requisite raw materials were weighed in appropriate proportions to obtain the resultant blank soda lime silicate flat glass of composition 73.06 wt.% SiO₂, 0.15 wt.% Al₂O_{3,} 13.7 wt.% Na₂O, 0.03 wt.% K₂O, 9.00 wt.% CaO, 4.00 wt.% MgO, and 0.02 wt.% TiO₂ along with 0.04 wt.% Fe coming as impurity from starting raw materials. The blank soda lime silicate flat glass was prepared as a reference glass in order to compare all other glass compositions in the present invention under similar laboratory conditions. The carefully weighed and thoroughly mixed chemical batch was charged in platinum crucible kept in resistance furnace at 1450°C and melted at 1600°C for 2 hrs. The cast glass was annealed at 550°C for 4 hrs. The density of the glass was measured to be 2.4981 g/cm³. The refractive index of the glass at 587.6 nm (*n_{d}*) was 1.5184 and the dispersion (*n*_{F}-*n*_{C}) was calculated as 0.0089. The measured CTE of the glass cylinder with 25 mm length and 6 mm diameter in the temperature range 50°C-300°C was found to be 91 × 10⁻⁷ K⁻¹ with an accuracy of ±1%. The T_{g} and T_{d} value obtained from dilatometer were 564 °C and 614 °C, respectively. The hardness value of the glass was 4.54 GPa with a standard deviation of 0.003. The optical transmission of the glass at 580 nm was found to be 91% (Figure 1). The experimental data of viscosity is presented in Figure 2. The temperatures at glass viscosity of 10¹ Pa.s and 10³ Pa.s were found to be 1436°C and 1017°C, respectively.

### EXAMPLE-2

The requisite raw materials were weighed in appropriate proportions to obtain the resultant flat glass of composition 68.80 wt.% SiO₂, 4.26 wt.% B₂O₃, 0.15 wt.% Al₂O₃, 13.7 wt.% Na₂O, 0.03 wt.% K₂O, 8.83 wt.% CaO, 4.00 wt.% MgO, 0.13 wt.% SrO, and 0.02 wt.% TiO₂ along with 0.04 wt.% Fe coming as impurity from starting raw materials. The carefully weighed and thoroughly mixed chemical batch was charged in platinum crucible kept in resistance furnace at 1450°C and melted at 1550°C for 2 hrs. The cast glass was annealed at 550°C for 4 hrs. The density of the glass was measured to be 2.5396 g/cm³. The refractive index of the glass at 587.6 nm (*n_{d}*) was 1.5243 and the dispersion (*n*_{F}-*n*_{C}) was calculated as 0.0086. The measured CTE of the glass cylinder with 25 mm length and 6 mm diameter in the temperature range 50°C-300°C was found to be 86 × 10⁻⁷ K⁻¹ with an accuracy of ±1%. The T_{g} and T_{d} value obtained from dilatometer were 572 °C and 622 °C, respectively. The hardness value of the glass was 5.10 GPa with a standard deviation of 0.05. The optical transmission at 580 nm was found to be 91% (Figure 1). The temperatures at glass viscosity of 10¹ Pa.s and 10³ Pa.s were found to be 1372°C and 979°C, respectively.

### EXAMPLE-3

The requisite raw materials were weighed in appropriate proportions to obtain the resultant flat glass of composition 64.54 wt.% SiO₂, 8.52 wt.% B₂O₃, 0.15 wt.% Al₂O₃, 13.7 wt.% Na₂O, 0.03 wt.% K₂O, 8.69 wt.% CaO, 4.00 wt.% MgO, 0.27 wt.% SrO, and 0.02 wt.% TiO₂ along with 0.04 wt.% Fe coming as impurity from starting raw materials. The carefully weighed and thoroughly mixed chemical batch was charged in platinum crucible kept in resistance furnace at 1400°C and melted at 1500°C for 2 hrs. The cast glass was annealed at 560°C for 4 hrs. The density of the glass was measured to be 2.5507 g/cm³. The refractive index of the glass at 587.6 nm (*n_{d}*) was 1.5298 and the dispersion (*n*_{F}-*n*_{C}) was calculated as 0.0087. The measured CTE of the glass cylinder with 25 mm length and 6 mm diameter in the temperature range 50°C-300°C was found to be 85 × 10⁻⁷ K⁻¹ with an accuracy of ±1%. The T_{g} and T_{d} value obtained from dilatometer were 580°C and 625°C, respectively. The hardness value of the glass was 5.50 GPa with a standard deviation of 0.02. The optical transmission at 580 nm was found to be 91% (Figure 1). The temperatures at glass viscosity of 10¹ Pa.s and 10³ Pa.s were found to be 1301°C and 944°C, respectively.

### EXAMPLE-4

The requisite raw materials were weighed in appropriate proportions to obtain the resultant flat glass of composition 60.82 wt.% SiO₂, 12.24 wt.% B₂O₃, 0.15 wt.% Al₂O_{3,} 13.7 wt.% Na₂O, 0.03 wt.% K₂O, 8.59 wt.% CaO, 4.00 wt.% MgO, 0.37 wt.% SrO and 0.02 wt.% TiO₂ along with 0.04 wt.% Fe coming as impurity from starting raw materials. The carefully weighed and thoroughly mixed chemical batch was charged in platinum crucible kept in resistance furnace at 1350°C and melted at 1450°C for 2 hrs. The cast glass was annealed at 570°C for 4 hrs. The density of the glass was measured to be 2.5638 g/cm³. The refractive index of the glass at 587.6 nm (*n_{d}*) was 1.5339 and the dispersion (*n*_{F}-*n*_{C}) was calculated as 0.0078. The measured CTE of the glass cylinder with 25 mm length and 6 mm diameter in the temperature range 50°C-300°C was found to be 84 × 10⁻⁷ K⁻¹ with an accuracy of ±1%. The T_{g} and T_{d} value obtained from dilatometer were 583 °C and 626 °C, respectively. The hardness value of the glass was 5.10 GPa with a standard deviation of 0.07. The optical transmission at 580 nm was found to be 91% (Figure 1). The experimental data of viscosity is presented in Figure 2. The temperatures at glass viscosity of 10¹ Pa.s and 10³ Pa.s were found to be 1234°C and 902°C, respectively.

### EXAMPLE-5

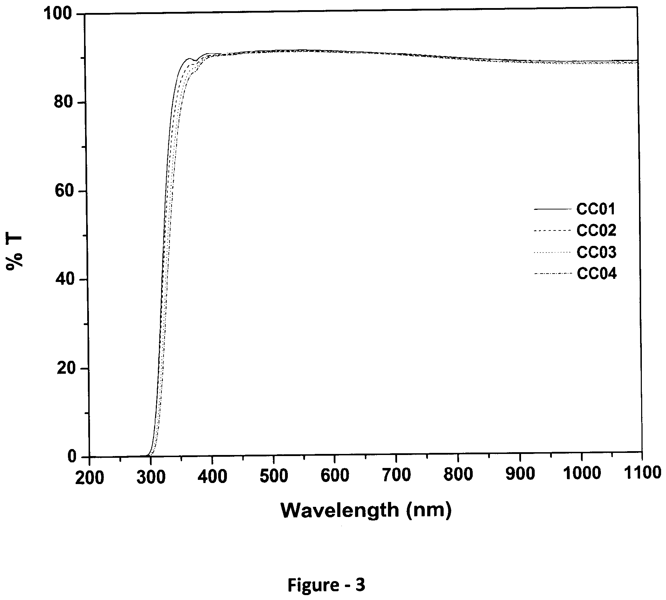

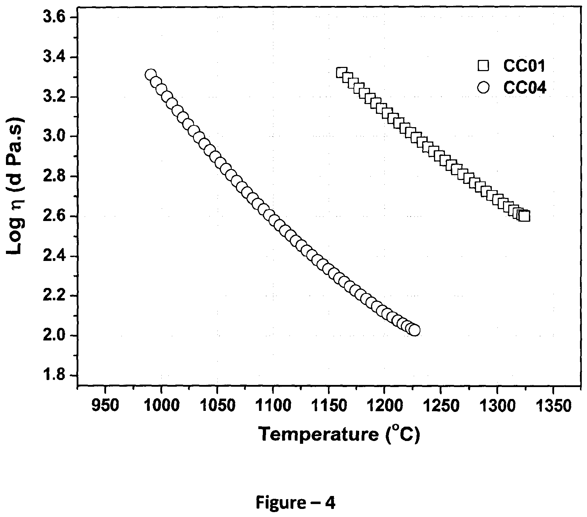

The requisite raw materials were weighed in appropriate proportions to obtain the resultant blank soda lime silicate container glass of composition 74.42 wt.% SiO₂, 1.30 wt.% Al₂O₃, 13.00 wt.% Na₂O, 0.30 wt.% K₂O, 10.50 wt.% CaO, 0.43 wt.% MgO and 0.01 wt.% TiO₂ along with 0.04 wt.% Fe coming as impurity from starting raw materials. The blank soda lime silicate flat glass was prepared as a reference glass in order to compare all other glass compositions in the present invention under similar laboratory conditions. The carefully weighed and thoroughly mixed chemical batch was charged in platinum crucible kept in resistance furnace at 1450°C and melted at 1600°C for 2 hrs. The cast glass was annealed at 560°C for 4 hrs. The density of the glass was measured to be 2.5007 g/cm³. The refractive index of the glass at 587.6 nm (*n_{d}*) was 1.5181 and the dispersion (*n*_{F}-*n*_{C}) was calculated as 0.0091. The measured CTE of the glass cylinder with 25 mm length and 6 mm dia in the temperature range 50°C-300°C was found to be 90 × 10⁻⁷ K⁻¹ with an accuracy of ±1%. The T_{g} and T_{d} value obtained from dilatometer were 582°C and 616°C, respectively. The hardness value of the glass was 4.46 GPa with a standard deviation of 0.05. The optical transmission at 580 nm was found to be 91% (Figure 3). The experimental data of viscosity is presented in Figure 4. The temperatures at glass viscosity of 10¹ Pa.s and 10³ Pa.s were found to be 1477°C and 1029°C, respectively.

### EXAMPLE-6

The requisite raw materials were weighed in appropriate proportions to obtain the resultant container glass of composition 69.45 wt.% SiO₂, 4.97 wt.% B₂O₃, 1.30 wt.% Al₂O₃, 13.00 wt.% Na₂O, 0.30 wt.% K₂O, 10.30 wt.% CaO, 0.46 wt.% MgO, 0.15 wt.% SrO and 0.01 wt.% TiO₂ along with 0.04 wt.% Fe coming as impurity from starting raw materials. The carefully weighed and thoroughly mixed chemical batch was charged in platinum crucible kept in resistance furnace at 1450°C and melted at 1550°C for 2 hrs. The cast glass was annealed at 560°C for 4 hrs. The density of the glass was measured to be 2.5264 g/cm³. The refractive index of the glass at 587.6 nm (*n_{d}*) was 1.5263 and the dispersion (*n*_{F}-*n*_{C}) was calculated as 0.0086. The measured CTE of the glass cylinder with 25 mm length and 6 mm diameter in the temperature range 50°C-300°C was found to be 87 × 10⁻⁷ K⁻¹ with an accuracy of ±1%. The T_{g} and T_{d} value obtained from dilatometer were 583°C and 622°C, respectively. The hardness value of the glass was 4.50 GPa with a standard deviation of 0.3. The optical transmission at 580 nm was found to be 91% (Figure 3). The temperatures at glass viscosity of 10¹ Pa.s and 10³ Pa.s were found to be 1413°C and 991°C, respectively.

### EXAMPLE-7

The requisite raw materials were weighed in appropriate proportions to obtain the resultant container glass of composition 64.48 wt.% SiO₂, 9.94 wt.% B₂O₃, 1.30 wt.% Al₂O_{3,} 13.00 wt.% Na₂O, 0.30 wt.% K₂O, 9.68 wt.% CaO, 0.93 wt.% MgO, 0.31 wt.% SrO and 0.01 wt.% TiO₂ along with 0.04 wt.% Fe coming as impurity from starting raw materials. The carefully weighed and thoroughly mixed chemical batch was charged in platinum crucible kept in resistance furnace at 1400°C and melted at 1500°C for 2 hrs. The cast glass was annealed at 565°C for 4 hrs. The density of the glass was measured to be 2.5540 g/cm³. The refractive index of the glass at 587.6 nm (*n_{d}*) was 1.5323 and the dispersion (*n*_{F}-*n*_{C}) was calculated as 0.0086. The measured CTE of the glass cylinder with 25 mm length and 6 mm diameter in the temperature range 50°C-300°C was found to be 86 × 10⁻⁷ K⁻¹ with an accuracy of ±1%. The T_{g} and T_{d} value obtained from dilatometer were 584 °C and 630 °C, respectively. The hardness value of the glass was 5.02 GPa with a standard deviation of 0.03. The optical transmission at 580 nm was found to be 91% (Figure 3). The temperatures at glass viscosity of 10¹ Pa.s and 10³ Pa.s were found to be 1346°C and 957°C, respectively.

### EXAMPLE-8

The requisite raw materials were weighed in appropriate proportions to obtain the resultant container glass of composition 69.45 wt.% SiO₂, 13.14 wt.% B₂O₃, 1.30 wt.% Al₂O_{3,} 13.00 wt.% Na₂O, 0.30 wt.% K₂O, 9.28 wt.% CaO, 1.24 wt.% MgO, 0.41 wt.% SrO and 0.01 wt.% TiO₂ along with 0.04 wt.% Fe coming as impurity from starting raw materials. The carefully weighted and thoroughly mixed chemical batch was charged in platinum crucible kept in resistance furnace at 1350°C and melted at 1450°C for 2 hrs. The cast glass was annealed at 570°C for 4 hrs. The density of the glass was measured to be 2.5568 g/cm³. The refractive index of the glass at 587.6 nm (*n_{d}*) was 1.5345 and the dispersion (*n*_{F}-*n*_{C}) was calculated as 0.0087. The measured CTE of the glass cylinder with 25 mm length and 6 mm diameter in the temperature range 50°C-300°C was found to be 83 × 10⁻⁷ K⁻¹ with an accuracy of ±1%. The T_{g} and T_{d} value obtained from dilatometer were 587°C and 635°C, respectively. The hardness value of the glass was 5.07 GPa with a standard deviation of 0.05. The optical transmission at 580 nm was found to be 91% (Figure 3). The experimental data of viscosity is presented in Figure 4. The temperatures at glass viscosity of 10¹ Pa.s and 10³ Pa.s are found to be 1275°C and 916°C, respectively.

In conclusion based on the examples given above, the invented soda lime silicate glass compositions for both flat and container glasses using colemanite in the present invention have showed high visible transmission, increased glass transition temperature, dilatometric softening temperature and better mechanical properties along with decreased coefficient of thermal expansion and melting temperature.

### ADVANTAGES OF THE INVENTION

The main advantages of the present invention are:
- Development of soda lime silicate glass compositions for energy efficient process with inclusion of boron oxide by the use of colemanite as raw material for both boron oxide and calcia for flat panels and containers.
- To develop soda lime silicate glass compositions using colemanite as one of the raw materials with reduced isokom temperature at a viscosity of 1Pa.s from 1436°C to 1234°C for flat glass compositions and from 1477°C to 1275°C for container glass compositions.
- Reduction in the melting temperature by at least 150°C from 1600 °C down to 1450 °C with the progressive addition of B₂O₃ incorporated from colemanite in the flat and container glass compositions.
- Use of colemanite instead of limestone (CaCO₃) eliminates the green house gas emission.
- To develop soda lime silicate glass compositions using colemanite offering a great benefit to the processing of solar panels reducing the production cost due to energy efficient processing with visible transmission higher than 90%.
- To develop soda lime silicate glass compositions using colemanite as one of the raw materials with increased glass transition temperature, dilatometric softening temperature and better mechanical properties along with decreased coefficient of thermal expansion.
- To develop soda lime silicate glass compositions using colemanite as one of the raw materials wherein SO₄⁻² radical coming from colemanite mineral improves the refining process of the glass melt.

## Claims

1. A soda lime silicate glass composition using colemanite comprising essentially of 60.82-69.45 wt% silica, 4.26-13.14 wt% B₂O₃, 13.00-13.70 wt% Na₂O, 8.59-10.30 wt% CaO along with other minor components in the indicated proportion of 0.15-1.30 wt% Al₂O₃, 0.03-0.30 wt% K₂O, 0.46-4.04 wt% MgO, 0.13-0.41 wt% SrO and 0.01-0.02 wt% TiO₂ with trace amount of impurities comprising of not more than 0.04 wt% Fe.

2. The use of a composition as claimed in claim 1, for the preparation of flat and container glasses.

3. The composition as claimed in claim 1, wherein it comprises 60.82-68.80 wt% SiO₂, 4.26-12.24 wt% B₂O₃, 13.70 wt% Na₂O, 0.03 wt% K₂O, 8.59-8.83 wt% CaO, 4.00 wt% MgO, 0.13-0.37 wt% SrO, 0.15 wt% Al₂O₃, 0.02 wt% TiO₂ along with not more than 0.04 wt% Fe and useful for the preparation of flat glasses.

4. The composition as claimed in claim 1, wherein it comprises 61.28-69.45 wt% SiO₂, 4.97-13.14 wt% B₂O₃, 13.00 wt% Na₂O, 0.30 wt% K₂O, 9.28-10.30 wt% CaO, 0.46-1.24 wt% MgO, 0.15-0.41 wt% SrO, 1.30 wt% Al₂O₃, 0.01 wt% TiO₂ along with not more than 0.04 wt% Fe and useful for the preparation of container glasses.

5. The composition as claimed in claim 1, wherein the total SiO₂ + B₂O₃ content does not exceed 73.06 wt%.

6. The composition as claimed in claim 1, wherein the total SiO₂ + B₂O₃ content does not exceed 74.42 wt%.

7. The composition as claimed in claim 1, wherein additional SrO and MgO that are introduced from colemanite mineral have been substituted with CaO and consequently the total alkaline earth content (CaO + MgO + SrO) does not exceed 10.93 wt%.

8. The composition as claimed in claim 1, wherein additional SrO and MgO that are introduced from colemanite mineral have been substituted with CaO and consequently the total alkaline earth content (CaO + MgO + SrO) does not exceed 13.00 wt%.

9. A process for the preparation of the composition as claimed in claim 1, comprising the steps:
[a] mixing 11.20 to 32.16 wt% colemanite, 58.95 to 68.31 wt% quartz, 0.41 wt% feldspar, 24.32 to 24.38 wt% soda ash, 0.0 to 10.58 wt% calcium carbonate, 0.06 to 0.08 wt% aluminum trioxide, 2.88 to 3.64 wt% magnesium oxide and 0.01 wt% titanium dioxide for obtaining soda lime silicate flat glass composition and 13.06 to 34.52 wt% colemanite, 56.48 to 71.08 wt% quartz, 4.12 wt% feldspar, 22.85 to 22.92 wt% soda ash, 0.0 to 12.22 wt% calcium carbonate, 0.72 to 0.74 wt% wt% aluminum trioxide, and 0.01 wt% titanium dioxide for obtaining soda lime silicate container glass composition for a period of 30 minutes to obtain a homogeneous batch mixture;
[b] melting the homogeneous batch mixtures as obtained in step [a] at temperature in the range of 1450 to 1600°C for a period of 2.0 hours with intermittent stirring manually at an interval of 45 minutes for two times with quartz rod in order to achieve a homogeneous melt;
[c] casting the homogeneous melt as obtained in step [b] on a cast iron mould preheated at 300°C-350°C to obtain glass slabs followed by its immediate transfer to annealing furnace kept at 550°C - 570°C to anneal for 4 hrs to obtain the desired glasses.

## Patentansprüche

1. Kalk-Natron-Silikatglas-Zusammensetzung unter Verwendung von Colemanit, im Wesentlichen umfassend 60,82-69,45 Gew.-% Siliciumoxid, 4,26-13,14 Gew.-% B₂O₃, 13,00-13,70 Gew.-% Na₂O, 8,59-10,30 Gew.-% CaO gemeinsam mit anderen Nebenbestandteilen in der angegebenen Proportion von 0,15-1,30 Gew.-% Al₂O₃, 0,03-0,30 Gew.-% K₂O, 0,46-4,04 Gew.-% MgO, 0,13-0,41 Gew.-% SrO und 0,01-0,02 Gew.-% TiO₂ mit Spurenkonzentrationen von Verunreinigungen umfassend nicht mehr als 0,04 Gew.-% Fe.

2. Verwendung einer Zusammensetzung nach Anspruch 1 für die Herstellung von Flach- und Behältergläsern.

3. Zusammensetzung nach Anspruch 1, wobei sie 60,82-68,80 Gew.-% SiO₂, 4,26-12,24 Gew.-% B₂O₃, 13,70 Gew.-% Na₂O, 0,03 Gew.-% K₂O, 8,59-8,83 Gew.-% CaO, 4,00 Gew.-% MgO, 0,13-0,37 Gew.-% SrO, 0,15 Gew.-% Al₂O₃, 0,02 Gew.-% TiO₂, gemeinsam mit nicht mehr als 0,04 Gew.-% Fe umfasst und nützlich für die Herstellung von Flachgläsern.

4. Zusammensetzung nach Anspruch 1, wobei sie 61,28-69,45 Gew.-% SiO₂, 4,97-13,14 Gew.-% B₂O₃, 13,00 Gew.-% Na₂O, 0,30 Gew.-% K₂O, 9,28-10,30 Gew.-% CaO, 0,46-1,24 Gew.-% MgO, 0,15-0,41 Gew.-% SrO, 1,30 Gew.-% Al₂O₃, 0,01 Gew.-% TiO₂, gemeinsam mit nicht mehr als 0,04 Gew.-% Fe umfasst und nützlich für die Herstellung von Behältergläsern.

5. Zusammensetzung nach Anspruch 1, wobei der gesamte SiO₂ + B₂O₃ Gehalt 73,06 Gew.-% nicht überschreitet.

6. Zusammensetzung nach Anspruch 1, wobei der gesamte SiO₂ + B₂O₃ Gehalt 74,42 Gew.-% nicht überschreitet.

7. Zusammensetzung nach Anspruch 1, wobei zusätzliches SrO und MgO, die aus Colemanit-Mineral zugesetzt werden, mit CaO substituiert worden sind, und folglich der gesamte Gehalt an Erdalkali (CaO + MgO + SrO) 10,93 Gew.-% nicht überschreitet.

8. Zusammensetzung nach Anspruch 1, wobei zusätzliches SrO und MgO, die aus Colemanit-Mineral zugesetzt werden, mit CaO substituiert worden sind, und folglich der gesamte Gehalt an Erdalkali (CaO + MgO + SrO) 13,00 Gew.-% nicht überschreitet.

9. Verfahren zur Herstellung der Zusammensetzung nach Anspruch 1, die folgenden Schritte umfassend:
[a] Mischen von 11,20 bis 32,16 Gew.-% Colemanit, 58,95 bis 68,31 Gew.-% Quarz, 0,41 Gew.-% Feldspat, 24,32 bis 24,38 Gew.-% Natriumkarbonat, 0,0 bis 10,58 Gew.-% Calciumcarbonat, 0,06 bis 0,08 Gew.-% Aluminiumtrioxid, 2,88 bis 3,64 Gew.-% Magnesiumoxid, und 0,01 Gew.-% Titandioxid für den Erhalt einer Kalk-Natron-Silikatflachglas-Zusammensetzung und 13,06 bis 34,52 Gew.-% Colemanit, 56,48 bis 71,08 Gew.-% Quarz, 4,12 Gew.-% Feldspat, 22,85 bis 22,92 Gew.-% Natriumkarbonat, 0,0 bis 12,22 Gew.-% Calciumcarbonat, 0,72 bis 0,74 Gew.-% Aluminiumtrioxid, 0,01 Gew.-% Titandioxid für den Erhalt einer Kalk-Natron-Silikatbehälterglas-Zusammensetzung für einen Zeitraum von 30 Minuten, um ein homgenes Chargen-Gemisch zu erhalten;
[b] Schmelzen der homgenen Chargen-Gemische, wie in Schritt [a] erhalten, bei einer Temperatur im Bereich von 1450 bis 1600 °C für einen Zeitraum von 2,0 Stunden unter zwischenzeitlichem händischen Rühren in einem Intervall von 45 Minuten zweimal mit einem Quarzstab, um eine homogene Schmelze zu erzielen;
[c] Gießen der Schmelze, wie in Schritt [b] erhalten, in eine auf 300 °C-350 °C vorgewärmte Gusseisenform, um Glasplatten zu erhalten, gefolgt von deren unmittelbaren Transfer in einen Glühofen, der auf 550 °C-570 °C gehalten wird, um 4 Stunden lang zu glühen, um die gewünschten Gläser zu erhalten.

## Revendications

1. Composition de verre de silicate sodocalcique utilisant de la colémanite comprenant essentiellement 60,82 à 69,45 % en poids de silice, 4,26 à 13,14 % en poids de B₂O₃, 13,00 à 13,70 % en poids de Na₂O, 8,59 à 10,30 % en poids de CaO ainsi que d'autres composants mineurs dans la proportion indiquée de 0,15 à 1,30 % en poids de Al₂O₃, 0,03 à 0,30 % en poids de K₂O, 0,46 à 4,04 % en poids de MgO, 0,13 à 0,41 % en poids de SrO et 0,01 à 0,02 % en poids de TiO₂ avec une quantité négligeable d'impuretés ne comprenant pas plus que 0,04 % en poids de Fe.

2. Utilisation de la composition selon la revendication 1, pour la préparation de verres plats et de conditionnement.

3. Composition selon la revendication 1, dans laquelle elle comprend 60,82 à 68,80 % en poids de SiO₂, 4,26 12,24 % en poids de B₂O₃, 13,70 % en poids de Na₂O, 0,03 % en poids de K₂O, 8,59 à 8,83 % en poids de CaO, 4,00 % en poids de MgO, 0,13 à 0,37 % en poids de SrO, 0,15 % en poids de Al₂O₃, 0,02 % en poids de TiO₂ ainsi que pas plus de 0,04 % en poids de Fe et utile pour la préparation de verres plats.

4. Composition selon la revendication 1, dans laquelle elle comprend 61,28 à 69,45 % en poids de SiO₂, 4,97 à 13,14 % en poids de B₂O₃, 13,00 % en poids de Na₂O, 0,30 % en poids de K₂O, 9,28 à 10,30 % en poids de CaO, 0,46 à 1,24 % en poids de MgO, 0,15 à 0,41 % en poids de SrO, 1,30 % en poids de Al₂O₃, 0,01 % en poids de TiO₂ ainsi que pas plus de 0,04 % en poids de Fe et utile pour la préparation de verres de conditionnement.

5. Composition selon la revendication 1, dans laquelle le contenu total de SiO₂ + B₂O₃ n'excède pas 73,06 % en poids.

6. Composition selon la revendication 1, dans laquelle le contenu total de SiO₂ + B₂O₃ n'excède pas 74,42 % en poids.

7. Composition selon la revendication 1, dans laquelle du SrO et du MgO supplémentaires qui sont introduits à partir d'un minéral colémanite ont été substitués avec du CaO et, en conséquence, le contenu alcalino-terreux total (CaO + MgO + SrO) n'excède pas 10,93 % en poids.

8. Composition selon la revendication 1, dans laquelle du SrO et du MgO supplémentaires qui sont introduits à partir d'un minéral colémanite ont été substitués avec du CaO et, en conséquence, le contenu alcalino-terreux total (CaO + MgO + SrO) n'excède pas 13,00 % en poids.

9. Procédé pour la préparation de la composition selon la revendication 1, comprenant les étapes de :
[a] mélange de 11,20 à 32,16 % en poids de colémanite, 58,95 à 68,31% en poids de quartz, 0,41 % en poids de feldspath, 24,32 à 24,38 % en poids de carbonate de soude, 0,0 à 10,58 % en poids de carbonate de calcium, 0,06 à 0,08 % en poids de trioxyde d'aluminium, 2,88 à 3,64 % en poids d'oxyde de magnésium et 0,01 % en poids de dioxyde de titane pour obtenir une composition de verre plat de silicate sodocalcique et de 13,06 à 34,52 % en poids de colémanite, 56,48 à 71,08 % en poids de quartz, 4,12 % en poids de feldspath, 22,85 à 22,92 % en poids de carbonate de soude, 0,0 à 12,22 % en poids de carbonate de calcium, 0,72 à 0,74% en poids de trioxyde d'aluminium, et 0,01% en poids de dioxyde de titane pour obtenir une composition de verre de conditionnement de silicate sodocalcique pendant une période de 30 minutes pour obtenir un mélange homogène ;
[b] fusion des mélanges homogènes tels qu'obtenus à l'étape [a] à une température dans la plage de 1450 à 1600°C pendant une période de 2,0 heures, en remuant à la main de manière intermittente à un intervalle de 45 minutes et à deux reprises avec une tige de quartz de façon à obtenir une matière fondu homogène ;
[c] coulage de la matière fondue homogène telle qu'obtenue à l'étape [b] sur un moule en fonte préchauffé entre 300 °C et 350 °C pour obtenir des dalles de verre suivi par son transfert immédiat vers un four de recuit maintenu entre 550 °C et 570 °C pour procéder à un recuit pendant 4 heures pour obtenir les verres désirés.
